# EUROPEAN PATENT SPECIFICATION

(11) **EP 1 582 086 B1**
(45) Date of publication and mention of the grant of the patent: **03.09.2008**
(21) Application number: 03775125.2
(22) Date of filing: 04.12.2003
(51) Int. Cl.: H04R 25/00

(54) **METHOD OF FITTING PORTABLE COMMUNICATION DEVICE TO A HEARING IMPAIRED USER**
VERFAHREN ZUR ANPASSUNG EINES TRAGBAREN KOMMUNIKATIONSGERÄTS AN EINEN HÖRGESCHÄDIGTEN BENUTZER
PROCEDE D'ADAPTATION D'UN DISPOSITIF DE COMMUNICATION PORTABLE A UN MALENTENDANT

(30) Priority: 09.12.2002 DK 200201885
(43) Date of publication of application: 05.10.2005
(73) Proprietor: Microsound A/S, 8600 Silkeborg (DK)
(72) Inventor: PEDERSEN, Soren, Louis, DK-8600 Silkeborg (DK); HERMANSEN, Kjeld, DK-9260 Gistrup (DK)
(74) Representative: Schmidt, Jens Joergen
(86) International application number: PCT/DK2003/000833
(87) International publication number: WO 2004/054318

(56) References cited:
- WO-A-99/48323
- WO-A-02/096154
- US-A- 4 139 730
- US-A- 4 820 059
- US-A- 5 434 924
- US-B1- 6 480 820

## Description

### Field of the invention

The present invention relates to a method of adapting signal processing characteristics of a portable communication device to a hearing impaired user, by means of perceptual judgements and narrow frequency band words.

### Background of the invention

Numerous methods have been applied for determining the optimal adaptation of an earphone, e.g. a hearing aid to a user of such an apparatus.

Traditionally, for example hearing aids are provided to a user based on initial tests performed for the purpose of determined user hearing representative data. Such data, well-described within audiometry, may for example be provided by means of e.g. an audiometer, determining the hearing level (HL), i.e. hearing threshold representative data.

A problem of the conventional hearing aid tuning methods is that the results apparently are somewhat questionable when evaluating the consumers satisfaction. Very often, carefully tuned hearing aid is simply put aside due to the fact the user feels most comfortable without it. Evidently, such lack of satisfaction by a relatively large group of consumers represents a problem, if not to the manufacturers of the hearing aid, at least to the consumers, which are basically left alone with an annoying uncompensated hearing loss.

It is an object of the invention to increase the satisfaction of the users and potential users of portable communication devices, in particular hearing aids.

### Summary of the invention

The present invention relates to a method of adapting signal processing characteristics of a portable communication device to a hearing impaired user, comprising the steps of
● determining a perceptual reference level (PRL) of a first stimuli signal (FSS) in a reference frequency band (RFB) by presenting said first stimuli signal (FSS) to said hearing impaired user, and obtaining perceptual judgements of a loudness of said first stimuli signal (FSS) from said hearing impaired user, and
● determining said perceptual reference level (PRL) of a second stimuli signal (SSS) in a further frequency band (FFB) by presenting said second stimuli signal (SSS) to said hearing impaired user, and requesting said hearing impaired user to compare a loudness of said second stimuli signal (SSS) with said loudness of said first stimuli signal (FSS).

According to the present invention, an advantageous method is provided for establishing signal processing characteristics that makes a portable communication device fit a specific hearing impaired user.

The signal processing characteristics may be fully or partly determined on the basis of the provided method. Preferably the method of the present invention is used to adapt default device-specific signal processing characteristics, to make the device fit the user.

A hearing impaired user may be any human being suffering from hearing impairments of any kind, comprising e.g. conductive and/or sensory-neural hearing loss.

The present invention relies on the user to make proper perceptual level judgements and accurate comparisons of loudness between presented signals. Besides involving the user with the adaptation of his or her own hearing aid, this also ensures the result of the fitting procedure to be what the user actually needs, instead of being what a practitioner or specialist might estimate the user to need, based on e.g. traditional audiogram data.

In one step of the method of the present invention, the user is asked to perceptually judge the hearing level of the first stimuli signal according to a perceptual reference level, which is e.g. the most comfortable level (MCL). To facilitate the user to make that judgement, different approaches may be attacked. Thus the user may preferably be able to increase or decrease the sound pressure level (SPL) of the first stimuli signal until it reaches the selected perceptual reference level.

In a further step of the method of the present invention, the user is presented with a second stimuli signal, and his or her task is to compare the loudness of the first and the second stimuli signals. To facilitate the user to make that comparison, he or she is preferably presented with the two signals in a paired comparison procedure and indicates which one is louder, and the sound pressure levels (SPL) of the signals is changed, before the user again is presented for the two signals, to give his or her indication of the louder signal. By repeating this procedure several times, it is possible to determine the relationships of the sound pressure levels and perceptual reference levels of the two signals, and thereby establish a mapping of the hearing impairment of the user. Other ways to facilitate the user to make the comparison of loudness is within the scope of the invention.

The first stimuli signal and second stimuli signal is preferably presented to the user by means of a test hearing aid substantially identical to the one the user is going to wear subsequently. However, other ways of presenting sound signals to a person are within the scope of the present invention.

It should be noted that the duration of a calibration procedure according to a preferred embodiment of the invention is preferably relative short, e.g. 15 minutes, and is carried out by the user in front of a computer, at home or in a store. However the calibration procedure according to a less preferred embodiment of the invention may as well be of much longer duration, e.g. two weeks, and carried out by the user wearing a feedback unit, as e.g. a wrist-watch like device comprising buttons, and letting the series of comparative audio presentations be the user's real sound environments established concurrently with the user experiencing them, and letting the user respond to these audio experiences using the buttons, thereby facilitating the establishment of signal processing parameters on the basis of the user selected preferred everyday audio experience. Within the general scope of the invention, this can be regarded as adaptive calibration.

When said portable communication device is a hearing aid, a further advantageous embodiment of the invention has been obtained.

According to this very preferred embodiment of the invention, the invention is used for fitting a hearing aid to a hearing impaired user.

When said portable communication device comprises compensation means for compensation of hearing loss, a further advantageous embodiment of the invention has been obtained.

According to this preferred embodiment of the invention, the invention is used for fitting the hearing loss compensation means part of portable communication devices having such means. Portable communication devices suited for being equipped with hearing loss compensation means comprise, not exclusively, headsets for e.g. cellular phones, headphones, handset, active ear defenders, personal in-ear monitors, etc.

When a most comfortable level (MCL) is used for said perceptual reference level (PRL), a further advantageous embodiment of the invention has been obtained.

According to this very preferred embodiment of the invention, the perceptual reference level is selected as the most comfortable level (MCL), which is defined as the hearing level (HL) preferred by the listener for listening to continuous discourse.

Research shows that human beings are generally good at recognizing the most comfortable level (MCL) in a repeatable and consistent manner. Since accurate determination of the MCL level is of key importance to determine correct amplification characteristic of the communication device for most everyday situations, this level is a preferred perceptual reference level (PRL).

When an uncomfortable level (UCL) is used for said perceptual reference level (PRL), a further advantageous embodiment of the invention has been obtained.

According to this preferred embodiment of the invention, the perceptual reference level is selected as the uncomfortable level (UCL), which is defined as the hearing level (HL) of continuous discourse that is uncomfortably loud to the listener, without being painful.

When said first stimuli signal (FSS) comprises periodic signals and / or frequency band limited noise, a further advantageous embodiment of the invention has been obtained.

According to this embodiment of the invention, the user is presented with a periodic signal, e.g. a pure sine signal, or frequency band limited noise. By using a pure tone it is possible to have a very narrow reference frequency band (RFB). By presenting the user with noise instead of pure tones, he or she may be better facilitated to make a proper judgement. The noise may comprise band-pass filtered white noise, band-pass filtered pink noise or other types of noise. By presenting the user with a sequence of noises or pure tones, he or she may be better facilitated to make a proper judgement.

When said first stimuli signal (FSS) comprises a sound, a further advantageous embodiment of the invention has been obtained.

According to this preferred embodiment of the invention, the user is presented with a sound. Thereby a possibility of using sounds more naturally occurring, and hence probably better known to the user, than pure tones and noises, has been obtained.

When said first stimuli signal (FSS) comprises a sequence of sounds, a further advantageous embodiment of the invention has been obtained.

According to this preferred embodiment of the invention, the user is presented with a series of sounds, and is thereby better facilitated to make a proper judgement.

When said sound is a test word, a further advantageous embodiment of the invention has been obtained.

According to this very preferred embodiment of the invention, the user is presented with spoken words. A test word is a carefully chosen word, preferably a single-syllable word or a pronouncement of a letter. The test words may e.g. be pre-recorded, be spoken by an assistant before the user, or be synthetically created by speech synthesis, etc.

When said test word has a spectral energy content of which an effective part is within said reference frequency band (RFB), a further advantageous embodiment of the invention has been obtained.

According to this very preferred embodiment of the invention, the words presented to the user are selected from a set of words that has the effective part of their spectral energy content placed within the reference frequency band. Thereby the user's perceptual judgement of the loudness of the test words is based on only his or her hearing skills within that specific frequency band.

Preferably the selected words have this characteristic naturally, i.e. they are presented unmodified to the user, but also words being adapted to have this characteristic, e.g. filtered by means of a band pass filter, are within the scope of the present invention.

The effective part of the spectral energy of a test word is preferably 60% - 100% of the total spectral energy of the word, and more preferably 70% - 100%, even more preferably 80% - 100%, and most preferably 90% - 100%.

When said test word is chosen according to the everyday of said hearing impaired user, a further advantageous embodiment of the invention has been obtained.

According to this very preferred embodiment of the invention, the user is presented with words he or she knows from everyday life. The words may e.g. be selected according to language, dialect, age, occupation or education of the user.

When said reference frequency band (RFB) is a sub-band of the audible frequency band, a further advantageous embodiment of the invention has been obtained.

According to this preferred embodiment of the invention, the user is presented with words having spectral energy effectively restricted to a specific sub-band of the audible frequency band. Thereby the perceptual reference level (PRL) is determined only for a sub-band of the audible frequency band, thus taking into account that a hearing impairment most often depends on frequency.

When said reference frequency band (RFB) is a sub-band of the frequency band from 100 Hz to 10 kHz, a further advantageous embodiment of the invention has been obtained.

According to this preferred embodiment of the invention, the user is presented with words having spectral energy effectively restricted to a specific sub-band of the frequency band 100 Hz to 10 kHz. Thereby the perceptual reference level (PRL) is determined only for a sub-band of the frequency band considered most important for speech and everyday sound perception, thus taking into account that a hearing impairment most often depends on frequency.

When said reference frequency band (RFB) has a width of 1,5 octave, a further advantageous embodiment of the invention has been obtained.

When said reference frequency band (RFB) has a width of one octave, a further advantageous embodiment of the invention has been obtained.

When said reference frequency band (RFB) has a width of 2/3 octave, a further advantageous embodiment of the invention has been obtained.

When said reference frequency band (RFB) has a width of 1/3 octave, a further advantageous embodiment of the invention has been obtained.

When said reference frequency band (RFB) is the band from 500 Hz to 1 kHz, a further advantageous embodiment of the invention has been obtained.

According to this very preferred embodiment of the invention, it is especially advantageous to use the frequency band from 500 Hz to I kHz for reference frequency band (RFB).

When said reference frequency band (RFB) is the band from 250 Hz to 800 Hz, a further advantageous embodiment of the invention has been obtained.

When said obtaining perceptual judgements of a loudness of said first stimuli signal (FSS) from said hearing impaired user, comprises the step of letting the user vary the sound pressure level (SPL) of the first stimuli signal (FSS) until said perceptual reference level (PRL) is achieved, a further advantageous embodiment of the invention has been obtained.

According to this very preferred embodiment of the invention, the user is able to turn the volume of the stimuli signal up or down, until a predetermined perceptual reference level is reached. This level is preferably the most comfortable level (MCL), but may alternatively be any perceptual level, as e.g. uncomfortable level (UCL), hearing threshold level (HTL), etc.

When said second stimuli signal (SSS) comprises periodic signals and / or frequency band limited noise, a further advantageous embodiment of the invention has been obtained.

According to this embodiment of the invention, the user is presented with a periodic signal, e.g. a pure sine signal, or frequency band limited noise. By using a pure tone it is possible to have a very narrow further frequency band (FFB). By presenting the user with noise instead of pure tones, he or she may be better facilitated to make a proper judgement. The noise may comprise band-pass filtered white noise, band-pass filtered pink noise or other types of noise. By presenting the user with a sequence of noises or pure tones, he or she may be better facilitated to make a proper judgement.

When said second stimuli signal (SSS) comprises a sound, a further advantageous embodiment of the invention has been obtained.

According to this preferred embodiment of the invention, the user is presented with a sound. Thereby a possibility of using sounds more naturally occurring, and hence probably better known to the user, than pure tones and noises, has been obtained.

When said second stimuli signal (SSS) comprises a sequence of sounds, a further advantageous embodiment of the invention has been obtained.

According to this preferred embodiment of the invention, the user is presented with a series of sounds, and is thereby better facilitated to make an accurate comparison.

When said sound of said second stimuli signal (SSS) is a test word, a further advantageous embodiment of the invention has been obtained.

According to this very preferred embodiment of the invention, the user is presented with spoken words. A test word is a carefully chosen word, preferably a single-syllable word or a pronouncement of a letter. The test words may e.g. be pre-recorded, be spoken by an assistant before the user, or be synthetically created by speech synthesis, etc.

When said test word of said second stimuli signal (SSS) has a spectral energy content of which an effective part is within said further frequency band (FFB), a further advantageous embodiment of the invention has been obtained.

According to this very preferred embodiment of the invention, the words presented to the user are selected from a set of words that has the effective part of their spectral energy content placed within the further frequency band. Thereby the user's comparison of the loudness of the test words is based on only his or her hearing skills within the reference and further frequency bands.

Preferably the selected words have this characteristic naturally, i.e. they are presented unmodified to the user, but also words being adapted to have this characteristic, e.g. filtered by means of a band pass filter, are within the scope of the present invention.

The effective part of the spectral energy of a test word is preferably 60% - 100% of the total spectral energy of the word, and more preferably 70% - 100%, even more preferably 80% - 100%, and most preferably 90% - 100%.

When said test word of said second stimuli signal (SSS) is chosen according to the everyday of said hearing impaired user, a further advantageous embodiment of the invention has been obtained.

According to this very preferred embodiment of the invention, the user is presented with words be or she knows from everyday life. The words may e.g. be selected according to language, dialect, age, occupation or education of the user.

When said second stimuli signal (SSS) is of a kind similar to said first stimuli signal (FSS), a further advantageous embodiment of the invention has been obtained.

According to this very preferred embodiment of the invention, the user is presented with two stimuli signals being of a similar kind, and thereby easier to compare. The signals may preferably be similar regarding properties as e.g. the language, dialect, length or difficultness of the words, the voice that speaks them, etc.

When said further frequency band (FFB) is a sub-band of the audible frequency band, a further advantageous embodiment of the invention has been obtained.

According to this preferred embodiment of the invention, the user is presented with words having spectral energy effectively restricted to a specific sub-band of the audible frequency band. Thereby the perceptual reference level (PRL) is determined only for a sub-band of the audible frequency band, thus taking into account that a hearing impairment most often changes with frequency.

When said further frequency band (FFB) is a sub-band of the frequency band from 100 Hz to 10 kHz, a further advantageous embodiment of the invention has been obtained.

According to this preferred embodiment of the invention, the user is presented with words having spectral energy effectively restricted to a specific sub-band of the frequency band 100 Hz to 10 kHz. Thereby the perceptual reference level (PRL) is determined only for a sub-band of the frequency band considered most important for speech and everyday sound perception, thus taking into account that a hearing impairment most often depends on frequency.

When said further frequency band (FFB) is different from said reference frequency band (RFB), a further advantageous embodiment of the invention has been obtained.

According to this very preferred embodiment of the version, the further frequency band is another band as the reference frequency band. Thereby it is possible on the basis of the user's comparisons of loudnesses to determine the difference in sound pressure level (SPL) needed, between sounds in the reference frequency band and the further frequency band, to have the user experience substantially equal loudness of sounds from the two bands.

When said step of
● determining said perceptual reference level (PRL) of a second stimuli signal (SSS) in a further frequency band (FFB) by presenting said second stimuli signal (SSS) to said hearing impaired user, and requesting said hearing impaired user to compare a loudness of said second stimuli signal (SSS) with said loudness of said first stimuli signal (FSS),
is repeated with several substantial mutually exclusive said further frequency bands, a further advantageous embodiment of the invention has been obtained.

According to this very preferred embodiment of the invention, a perceptual reference level is determined for several different frequency bands. Thereby the hearing impairment regarding sound pressure level against frequency of the full audible frequency range, or parts thereof, may be obtained.

When said further frequency band (FFB) has a width of 1,5 octave, a further advantageous embodiment of the invention has been obtained.

When said further frequency band (FFB) has a width of one octave, a further advantageous embodiment of the invention has been obtained.

When said further frequency band (FFB) has a width of 2/3 octave, a further advantageous embodiment of the invention has been obtained.

When said further frequency band (FFB) has a width of 1/3 octave, a further advantageous embodiment of the invention has been obtained.

When said further frequency band (FFB) is the band from 100 Hz to 500 Hz, a further advantageous embodiment of the invention has been obtained.

When said further frequency band (FFB) is the band from 250 Hz to 500 Hz, a further advantageous embodiment of the invention has been obtained.

When said further frequency band (FFB) is the band from I kHz to 2 kHz, a further advantageous embodiment of the invention has been obtained.

When said further frequency band (FFB) is the band from 2 kHz to 4 kHz, a further advantageous embodiment of the invention has been obtained.

When said comparing a loudness of said second stimuli signal (SSS) with said loudness of said first stimuli signal (FSS), is performed to establish equal loudness, a further advantageous embodiment of the invention has been obtained.

According to this very preferred embodiment of the invention, the user is presented with two signals, and is asked to compare their loudness with reference to the equality.

The present invention further relates to a method of adapting signal processing characteristics of a portable communication device to a hearing impaired user, comprising the steps of
● evaluating a hearing impairment of said hearing impaired user by presenting at least one stimuli signal (SS) to said hearing impaired user, and obtaining perceptual judgements of a predetermined attribute of said at least one stimuli signal (SS) from said hearing impaired user, and
● adjusting said signal processing parameters of said portable communication device according to said perceptual judgements of said at least one stimuli signal (SS);
whereby said at least one stimuli signal (SS) comprises a set of test words, said test words each having a spectral energy content of which the effective part is within one restricted frequency band selected from a set of restricted frequency bands.

According to the present invention, an advantageous method is provided for establishing signal processing characteristics that makes a portable communication device fit a specific hearing impaired user.

The signal processing characteristics may be fully or partly determined on the basis of the provided method. Preferably the method of the present invention is used to adapt default device-specific signal processing characteristics, to make the device fit the user.

A hearing impaired user may be any human being suffering from hearing impairments of any kind, comprising e.g. conductive or sensory hearing loss.

The present invention relies on the user to make proper perceptual judgements of attributes of a stimuli signal. Besides involving the user with the adaptation of his or her own hearing aid, this also ensures the result to be what the user actually needs, instead of being what a practitioner or specialist might estimate the user to need, based on e.g. traditional audiogram data.

In one step of the method of the present invention, the user is asked to perceptually judge attributes as e.g. loudness, clarity, intelligibility, etc., of a stimuli signal. To facilitate the user to make that judgement, he or she is preferably presented with different test words, and is asked to e.g. choose a loudest, a clearest, a most uncomfortable, etc., test word from the presented sound. By repeating this, an evaluation of the users hearing impairment may be established. Other ways to facilitate the user to make the perceptual judgements are within the scope of the invention.

A very valuable advantage of using words for evaluating characteristics of a hearing impairment as opposed to traditional pure tones or frequency band limited noise, is that thereby the user may be presented with sounds more relevant for his or her daily communication needs. The test words presented to the user may e.g. be pre-recorded in digital or analog form, be spoken by an assistant before the user, or be synthetically created by speech synthesis, etc.

By using test words having respective restricted spectral energy content, it is possible to present the user with a set of test words being mutually exclusive regarding frequency contents. Thereby the user's perceptual judgement of attributes of the set of test words is based on only his or her hearing ability within that specific frequency band. Hence is taken into account that a hearing impairment most often changes with frequency.

Preferably the test words have this characteristic naturally, i.e. they are presented unmodified to the user, but also test words which has been electronically manipulated to acquire this restricted spectral energy content characteristic, e.g. filtered, time-domain stretched or compressed etc., are within the scope of the present invention.

The effective part of the spectral energy of a test word in the restricted frequency band is preferably larger than 60 % of the total spectral energy of the word, and even more preferably larger than 80 %, such as 85 % or 90 %.

The test words are preferably single syllable words, but may be any words, sentences, pronouncements of letters, numbers, etc. A set of test words may comprise one or more test words.

The at least one stimuli signal is preferably presented to the user by means of a test hearing aid substantially identical to the one the user is going to wear subsequently. However, other ways of presenting stimuli signals to the user, such as by loudspeakers or headphones, are within the scope of the present invention.

It should be noted that the duration of a calibration procedure according to a preferred embodiment of the invention is preferably relative short, e.g. 15 minutes, and is carried out by the user in front of a computer, at home or in a store. However the calibration procedure according to a less preferred embodiment of the invention may as well be of much longer duration, e.g. two weeks, and carried out by the user wearing a feedback unit, as e.g. a wrist-watch like device comprising buttons, and letting the series of comparative audio presentations be the user's real sound environments established concurrently with the user experiencing them, and letting the user respond to these audio experiences using the buttons, thereby facilitating the establishment of signal processing parameters on the basis of the user selected preferred everyday audio experience. Within the general scope of the invention, this can be regarded as adaptive calibration.

When said portable communication device is a hearing aid, a further advantageous embodiment of the invention has been obtained.

According to this very preferred embodiment of the invention, the invention is used for fitting a hearing aid to a hearing impaired user.

When said portable communication device comprises compensation means for compensation of hearing loss, a further advantageous embodiment of the invention has been obtained.

According to this preferred embodiment of the invention, the invention is used for fitting the hearing loss compensation means part of portable communication devices having such means. Portable communication devices suited for being equipped with hearing loss compensation means comprise, not exclusively, headsets for e.g. cellular phones, headphones, handset, active ear defenders, personal in-ear monitors, etc.

When said test word is chosen according to the everyday of said hearing impaired user, a further advantageous embodiment of the invention has been obtained.

According to this very preferred embodiment of the invention, the user is presented with words he or she knows from everyday life. The words may e.g. be selected according to language, dialect, age, occupation or education of the user.

When said restricted frequency band is a sub-band of the audible frequency band, a further advantageous embodiment of the invention has been obtained.

According to this preferred embodiment of the invention, the user is presented with words having spectral energy effectively restricted to a specific sub-band of the audible frequency band. Thereby the perceptual judgement of signal attributes is determined only for a sub-band of the audible frequency band, thus taking into account that a hearing impairment most often changes with frequency.

When said restricted frequency band has a width of 1,5 octave, a further advantageous embodiment of the invention has been obtained.

When said restricted frequency band has a width of one octave, a further advantageous embodiment of the invention has been obtained.

When said restricted frequency band has a width of 2/3 octave, a further advantageous embodiment of the invention has been obtained.

When said restricted frequency band has a width of 1/3 octave, a further advantageous embodiment of the invention has been obtained.

When said restricted frequency band is the band from 500 Hz to 1 kHz, a further advantageous embodiment of the invention has been obtained.

When said restricted frequency band is the band from 250 Hz to 800 Hz When said restricted frequency band has a width of 2/3 octave, a further advantageous embodiment of the invention has been obtained.

When said restricted frequency band is the band from 100 Hz to 500 Hz, a further advantageous embodiment of the invention has been obtained.

When said restricted frequency band is the band from 250 Hz to 500 Hz, a further advantageous embodiment of the invention has been obtained.

When said restricted frequency band is the band from 1 kHz to 2 kHz, a further advantageous embodiment of the invention has been obtained.

When said restricted frequency band is the band from 2 kHz to 4 kHz, a further advantageous embodiment of the invention has been obtained.

When said obtaining perceptual judgements of a predetermined attribute of said at least one stimuli signal (SS) from said hearing impaired user, comprises the step of letting said user vary said predetermined attribute until a predetermined perceptual level is achieved, a further advantageous embodiment of the invention has been obtained.

According to this very preferred embodiment of the invention, the user is able to adjust said predetermined attribute, e.g. turning the volume up or down, until a predetermined perceptual reference level is reached.

When said step of
● evaluating a hearing impairment of said hearing impaired user by presenting at least one stimuli signal (SS) to said hearing impaired user, and obtaining perceptual judgements of a predetermined attribute of said at least one stimuli signal (SS) from said hearing impaired user,
is repeated with several substantial mutually exclusive said restricted frequency bands, a further advantageous embodiment of the invention has been obtained.

According to this very preferred embodiment of the invention, a perceptual judgement of a predetermined attribute is obtained for several different frequency bands. Thereby the hearing impairment regarding sound pressure level against frequency of the full audible frequency range, or parts thereof, may be obtained.

When said hearing impaired user is presented with at least two stimuli signals (SS), a further advantageous embodiment of the invention has been obtained.

According to this very preferred embodiment of the invention, preferably two, but possibly more, signals of test words are presented to the user. Thereby it is possible to request the user to make comparisons instead of absolute judgements.

When said predetermined attribute is a perceptual hearing level, a further advantageous embodiment of the invention has been obtained.

According to this very preferred embodiment of the invention, the user is requested to judge the hearing level or loudness of the stimuli signals. As most hearing impairments are partly characterized by different hearing loss for different frequencies, it is important to obtain the user's hearing level for different frequencies.

When said predetermined attribute is consonant discrimination, a further advantageous embodiment of the invention has been obtained.

According to this very preferred embodiment of the invention, the user is tested regarding his or her perception of preferably high frequency speech sounds, as e.g. consonants. By high frequency is referred to the audible frequency band above 2 kHz, and preferably the frequency band 2 kHz - 4 kHz. Preferably the user is presented with two words, whose pronunciations differ only by a consonant, as e.g. in the words "lant" and "slant". By inquiring the user whether he or she is able to differentiate between the two words or not, it is possible to determine a further requirement for the signal processing of the portable communication device.

When said predetermined attribute is intelligibility, a further advantageous embodiment of the invention has been obtained.

When said predetermined attribute is clarity, a further advantageous embodiment of the invention has been obtained.

When said obtaining perceptual judgements of a predetermined attribute of said at least one stimuli signal (SS) from said hearing impaired user, is repeated with a further predetermined attribute, a further advantageous embodiment of the invention has been obtained.

According to this very preferred embodiment of the invention, the procedure is repeated with a further predetermined attribute, Thereby it is possible to establish evaluation of the user's hearing impairment regarding different attributes. Furthermore a repetition may be used for fine-tuning the signal processing parameters of said portable communication device.

### List of drawings

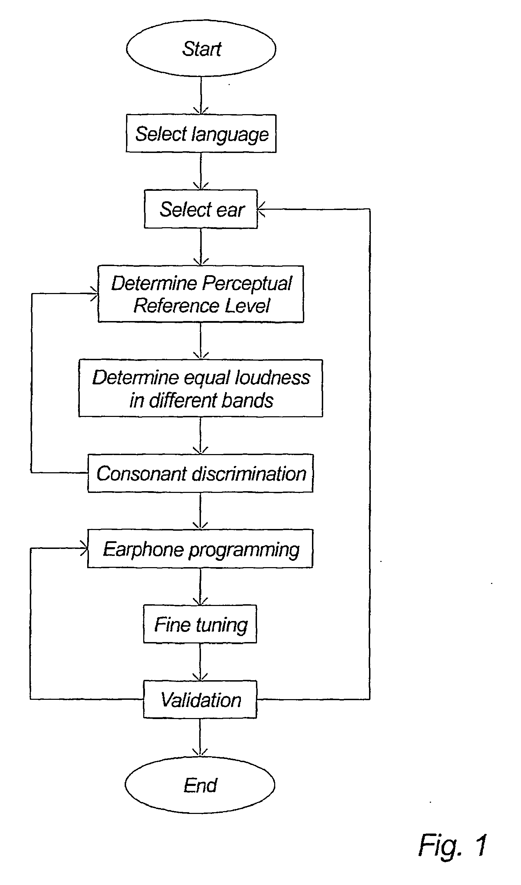

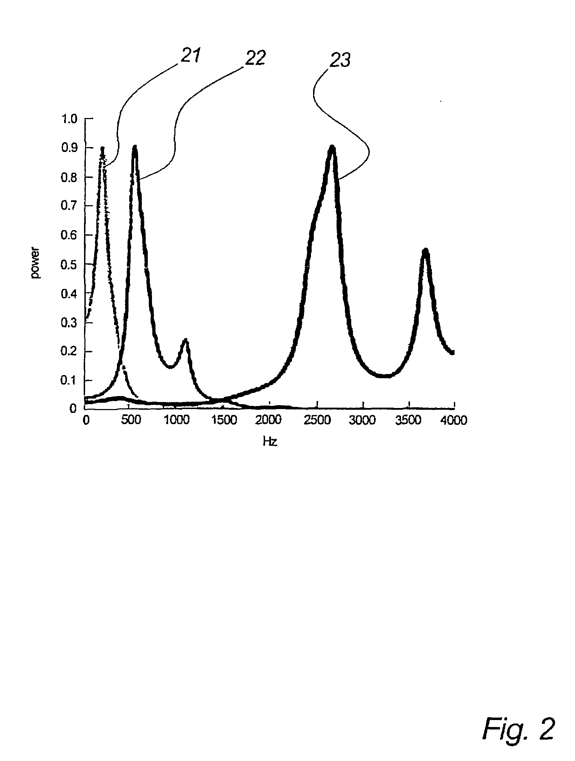

The present invention is in the following described in more detail with reference to the drawings, of which
fig. 1 shows a flowchart illustrating a preferred flow of steps of the current invention and fig. 2 shows three Swedish words having restricted spectral energy content.

### Detailed description

The present invention may be used for adapting signal processing characteristics of any kind of portable communication devices, e.g. hearing aids, headsets, active ear defenders, ear phones, mobile phones, etc, to a hearing impaired user. Preferably such devices comprise hearing loss compensation means, and the present invention is used for fitting these means to the hearing impaired user.

The most preferred embodiment of the invention is applied when fitting hearing aids. Preferably the method of the present invention is embodied to be carried out in a store or in a home, as opposite to attend a practitioner or specialist. A preferred embodiment comprises a processing unit comprising a sound rendering means and interface means, e.g. a PC with a sound card and touch screen, a person equipped with a test portable communication device, preferably an adapted version of the same device as the user will be carrying subsequent to the test, and a programming unit.

Fig. 1 shows a preferred flow of steps with a preferred embodiment of the present invention.
First step includes selection of language and left / right ear.

The test frequency range is split into the following four bands. Speech stimuli are carefully selected for each of the four bands. Low frequency, preferably 100 Hz - 500 Hz, reference frequency, preferably 500 Hz - 1 kHz, high frequency, preferably 1 kHz - 2 kHz, and extra high frequency, preferably 2 kHz - 4 kHz.

### There are five basic stages:

Volume measurement - divided in three volume levels: Most Comfortable frequency response, "Loud Level" frequency response and "Soft Level" frequency response.
Loudness comparison - measured in the three volume levels
Consonant discrimation - measured in the three volume levels
Programming of hearing aid.
Fine Tuning

Stage 1, 2 and 3 is repeated for the three volume levels.

### Stage One: Volume measurement

For Most Comfortable frequency response Reference band stimuli are presented at 65 dB equivalent input level.
User adjusts gain until most comfortable for conversation (MCL)

For Loud Level Reference band the volume level is increased by 15 dB
User is asked if this is "loud but not too loud"
If too loud, gain is reduced

For Soft Level Reference the volume level is decreased by 15 dB
User is asked if this is "soft but understandable"
If not understandable, Reference band gain is increased

### Stage Two: Loudness comparison - measured in the three volume levels

Clients then conducts series of easy A-B "loudness" comparisons
Low band stimuli compared to Reference band
High band stimuli compared to Reference band
Extra high band level set initially same as High band level

### Stage Three: Consonant discrimation - measured in the three volume levels

Users often underestimate high frequency gain needs
Clients conduct A-B discrimination tests with "s" present and absent
Example: "LANT" verses "SLANT"
If they can hear the difference, High band left unchanged
If they can't hear the difference, High band gain is boosted

### Stage Four: Programming of Earphone

The Earphone is programmed with the actual Ear Tuner settings, and the Earphone microphone is activated.

### Stage Four: Fine Tuning

In the fine tuning, the following goals are achieved:
Compensate for feedback
Compensate for occlusion
Validate fitting with a range of real world test signals.

### Audiology

The method of the present invention is solidly rooted in the science of Audiology. The use of prescriptive formulae based on the measurement of HTL is a well established and verified approach to hearing aid fitting. The goal in each case is to set the gain of a hearing aid so that conversational sound is placed at the client's most comfortable loudness (MCL) level. A further goal is to optimize gain at low and high levels of speech.

On-going Audiology research indicates that the fitting can be improved by including the client in a fine tuning exercise after the application of the prescription. This takes into account any errors due to the use of average data in the prescription, as well as client psycho-acoustic preferences.

The method of the present invention builds upon this long history of established Audiology, and incorporates the advantages of user involvement. It uses a robust method to measure MCL directly, as opposed to predicting it from HTL. By using actual devices "in-situ", it automatically compensates for calibration issues and the use of average data, and it takes into account the users individual psycho-acoustic preferences.

The method of the present invention has been validated by comparing the hearing aid settings against those that would be achieved from popular predictive formulae. It has also been validated through user preference and listening evaluations. It has emerged as a robust fitting system that helps the Audiologist achieve effective fittings by including the client in the process.

Fig. 2 shows three words having spectral energy content in three different frequency bands. The first word 21 is the Swedish word "tor", and has relative low frequency content. The next word 22 is the Swedish word "bar", and has relatively higher frequency content. The last word 23 is the Swedish word "ring", and has relative high frequency content.

Advances in the science of speech have been dramatic over the past decade. Models of the speech generation system are becoming more and more accurate. Research has also identified characteristics of speech that can be used for speech recognition, speech synthesis and security.

This knowledge of speech signals has been incorporated into the method of the present invention. The goal was to be able to use real world speech signals for the test stimuli. This would make the experience more tangible for the client and help ensure that the device was optimized for real world signals.

Example of frequency distribution of ortogonal words used in the Loudness Comparison fitting procedure.

It was equally important that the stimuli be functionally identical to stimuli normally used in Audiometric testing and evaluation. Thus, it was important to create a body of stimuli that had very well understood frequency and energy characteristics.

These goals were achieved with the method of the present invention. The result is a set of single word stimuli in a variety of languages that can provide robust information about the client's hearing loss in each of the four test frequency bands. This information is then used to adjust the hearing aid gain settings.

## Claims

1. A method of adapting signal processing characteristics of a portable communication device to a hearing impaired user, comprising the steps of
● evaluating a hearing impairment of said hearing impaired user by presenting at least one stimuli signal (SS) to said hearing impaired user, and obtaining perceptual judgements of a predetermined attribute of said at least one stimuli signal (SS) from said hearing impaired user, and
● adjusting said signal processing parameters of said portable communication device according to said perceptual judgements of said at least one stimuli signal (SS);
whereby said at least one stimuli signal (SS) comprises a set of test words, said test words each having a spectral energy content of which the effective part is within one restricted frequency band selected from a set of restricted frequency bands.

2. A method of adapting signal processing characteristics of a portable communication device according to claim 1, wherein said portable communication device is a hearing aid.

3. A method of adapting signal processing characteristics of a portable communication device according to claim 1 or 2, wherein said portable communication device comprises compensation means for compensation of hearing loss.

4. A method of adapting signal processing characteristics of a portable communication device according to any of the claims 1 to 3, wherein said obtaining perceptual judgements of a predetermined attribute of said at least one stimuli signal (SS) from said hearing impaired user, comprises the step of letting said user vary said predetermined attribute until a predetermined perceptual level is achieved.

5. A method of adapting signal processing characteristics of a portable communication device according to any of the claims 1 to 4, wherein said step of
● evaluating a hearing impairment of said hearing impaired user by presenting at least one stimuli signal (SS) to said hearing impaired user, and obtaining perceptual judgements of a predetermined attribute of said at least one stimuli signal (SS) from said hearing impaired user,
is repeated with several substantial mutually exclusive restricted frequency bands.

6. A method of adapting signal processing characteristics of a portable communication device according to any of the claims 1 to 5, wherein said hearing impaired user is presented with at least two stimuli signals (SS).

7. A method of adapting signal processing characteristics of a portable communication device according to any of the claims 1 to 6, wherein said predetermined attribute is a perceptual hearing level.

8. A method of adapting signal processing characteristics of a portable communication device according to any of the claims 1 to 7, wherein said predetermined attribute is consonant discrimination.

9. A method of adapting signal processing characteristics of a portable communication device according to any of the claims 1 to 8, wherein said predetermined attribute is intelligibility.

10. A method of adapting signal processing characteristics of a portable communication device according to any of the claims 1 to 9, wherein said predetermined attribute is clarity.

11. A method of adapting signal processing characteristics of a portable communication device according to any of the claims 1 to 10, wherein said obtaining perceptual judgements of a predetermined attribute of said at least one stimuli signal (SS) from said hearing impaired user, is repeated with a further predetermined attribute.

12. A method of adapting signal processing characteristics of a portable communication device according to any of the claims 1 to 11, further comprising the steps of
● determining a perceptual reference level (PRL) of a first stimuli signal (FSS) in a reference frequency band (RFB) by presenting said first stimuli signal (FSS) to said hearing impaired user, and obtaining perceptual judgements of a loudness of said first stimuli signal (FSS) from said hearing impaired user, and
● determining said perceptual reference level (PRL) of a second stimuli signal (SSS) in a further frequency band (FFB) by presenting said second stimuli signal (SSS) to said hearing impaired user, and requesting said hearing impaired user to compare a loudness of said second stimuli signal (SSS) with said loudness of said first stimuli signal (FSS).

13. A method of adapting signal processing characteristics of a portable communication device according to claim 12, wherein a most comfortable level (MCL) is used for said perceptual reference level (PRL).

14. A method of adapting signal processing characteristics of a portable communication device according to claim 12 or 13, wherein an uncomfortable level (UCL) is used for said perceptual reference level (PRL).

15. A method of adapting signal processing characteristics of a portable communication device according to any of the claims 12 to 14, wherein said obtaining perceptual judgements of a loudness of said first stimuli signal (FSS) from said hearing impaired user, comprises the step of letting the user vary the sound pressure level (SPL) of the first stimuli signal (FSS) until said perceptual reference level (PRL) is achieved.

16. A method of adapting signal processing characteristics of a portable communication device according to any of the claims 12 to 15, wherein said second stimuli signal (SSS) is of a kind similar to said first stimuli signal (FSS).

17. A method of adapting signal processing characteristics of a portable communication device according to any of the claims 12 to 16, wherein said further frequency band (FFB) is different from said reference frequency band (RFB).

18. A method of adapting signal processing characteristics of a portable communication device according to any of the claims 12 to 17, wherein said step of
● determining said perceptual reference level (PRL) of a second stimuli signal (SSS) in a further frequency band (FFB) by presenting said second stimuli signal (SSS) to said hearing impaired user, and requesting said hearing impaired user to compare a loudness of said second stimuli signal (SSS) with said loudness of said first stimuli signal (FSS),
is repeated with several substantial mutually exclusive said further frequency bands.

19. A method of adapting signal processing characteristics of a portable communication device according to any of the claims 12 to 18, wherein said comparing a loudness of said second stimuli signal (SSS) with said loudness of said first stimuli signal (FSS), is performed to establish equal loudness.

20. A method of adapting signal processing characteristics of a portable communication device according to any of the claims 12 to 15, wherein one or more of said first stimuli signal (FSS) or said second stimuli signal (SSS) comprise periodic signals and / or frequency band limited noise.

21. A method of adapting signal processing characteristics of a portable communication device according to any of the claims 12 to 15 or 20, wherein one or more of said first stimuli signal (FSS) or said second stimuli signal (SSS) comprise a sound.

22. A method of adapting signal processing characteristics of a portable communication device according to any of the claims 12 to 15 or 20 to 21, wherein one or more of said first stimuli signal (FSS) or said second stimuli signal (SSS) comprise a sequence of sounds.

23. A method of adapting signal processing characteristics of a portable communication device according to claim 21 or 22, wherein said sound comprised by said first stimuli signal (FSS) or said second stimuli signal (SSS) is a test word.

24. A method of adapting signal processing characteristics of a portable communication device according to claim 23, wherein said test word comprised by said first stimuli signal (FSS) or said second stimuli signal (SSS) has a spectral energy content of which an effective part is within said reference frequency band (RFB) or said further frequency band (FFB), respectively.

25. A method of adapting signal processing characteristics of a portable communication device according to any of the claims 1 to 3, 12 to 15 or 23 to 24, wherein one or more of said test word of said at least one stimuli signal (SS), said first stimuli signal (FSS) or said second stimuli signal (SSS) is chosen according to the everyday of said hearing impaired user.

26. A method of adapting signal processing characteristics of a portable communication device according to any of the claims 1 to 3, 12 to 15 or 20 to 25, wherein one or more of said restricted frequency band, said reference frequency band (RFB) or said further frequency band is a sub-band of the audible frequency band.

27. A method of adapting signal processing characteristics of a portable communication device according to any of the claims 12 to 15 or 20 to 26, wherein one or more of said reference frequency band (RFB) or said further frequency band (FFB) is a sub-band of the frequency band from 100 Hz to 10 kHz.

28. A method of adapting signal processing characteristics of a portable communication device according to any of the claims 1 to 3, 12 to 15 or 20 to 27, wherein one or more of said restricted frequency band, said reference frequency band (RFB) or said further frequency band (FFB) has a width selected from the widths of 1.5 octave, one octave, 2/3 octave or 1/3 octave.

29. A method of adapting signal processing characteristics of a portable communication device according to any of the claims 1 to 3, 12 to 15 or 20 to 28, wherein one or more of said restricted frequency band or said reference frequency band (RFB) is a band selected from the bands of the band from 500 Hz to 1 kHz or the band from 250 Hz to 800 Hz.

30. A method of adapting signal processing characteristics of a portable communication device according to any of the claims 1 to 3, 12 to 15 or 20 to 29, wherein one or more of said restricted frequency band or said further frequency band (FFB) is a band selected from the bands of the band from 100 Hz to 500 Hz, the band from 250 Hz to 500 Hz, the band from 1 kHz to 2 kHz or the band from 2 kHz to 4 kHz.

## Patentansprüche

1. Verfahren zum Anpassen von Signalverarbeitungscharakteristiken eines tragbaren Kommunikationsgerätes für einen hörgeschädigten Nutzer, umfassend die Verfahrensschritte
- Bewerten einer Hörschädigung des hörgeschädigten Nutzers, indem dem hörgeschädigten Nutzer mindestens ein Anregungssignal (SS) präsentiert wird, und Erhalten von die Wahrnehmung betreffenden Beurteilungen einer vorgegebenen Eigenschaft des mindestens einen Anregungssignals (SS) von dem hörgeschädigten Nutzer, und
- Einstellen der Signalverarbeitungsparameter des tragbaren Kommunikationsgerätes gemäß den die Wahrnehmung betreffenden Beurteilungen des mindestens einen Anregungssignals (SS);
wobei das mindestens eine Anregungssignal (SS) einen Satz von Testworten umfasst, wobei die Testworte jeweils einen Spektralenergiegehalt haben, von dem sich der effektive Teil innerhalb eines begrenzten Frequenzbandes befindet, das aus einem Satz von begrenzten Frequenzbändern ausgewählt ist.

2. Verfahren zum Anpassen von Signalverarbeitungscharakteristiken eines tragbaren Kommunikationsgerätes nach Anspruch 1, wobei das tragbare Kommunikationsgerät eine Hörhilfe ist.

3. Verfahren zum Anpassen von Signalverarbeitungscharakteristiken eines tragbaren Kommunikationsgerätes nach Anspruch 1 oder 2, wobei das tragbare Kommunikationsgerät Kompensationsmittel zur Kompensation von Hörverlust umfasst.

4. Verfahren zum Anpassen von Signalverarbeitungscharakteristiken eines tragbaren Kommunikationsgerätes nach einem der Ansprüche 1 bis 3, wobei das Erhalten von die Wahrnehmung betreffenden Beurteilungen einer vorgegebenen Eigenschaft des mindestens einen Anregungssignals (SS) von dem hörgeschädigten Nutzer den Schritt umfasst, dass man den Nutzer die vorgegebene Eigenschaft variieren lässt, bis ein vorgegebener Wahrnehmungspegel erreicht wird.

5. Verfahren zum Anpassen von Signalverarbeitungscharakteristiken eines tragbaren Kommunikationsgerätes nach einem der Ansprüche 1 bis 4, wobei der Schritt des
- Bewertens einer Hörschädigung des hörgeschädigten Nutzers, indem dem hörgeschädigten Nutzer mindestens ein Anregungssignal (SS) präsentiert wird, und des Erhaltens von die Wahrnehmung betreffenden Beurteilungen einer vorgegebenen Eigenschaft des mindestens einen Anregungssignals (SS) von dem hörgeschädigten Nutzer
mit mehreren wesentlichen einander gegenseitig ausschließende begrenzten Frequenzbändern wiederholt wird.

6. Verfahren zum Anpassen von Signalverarbeitungscharakteristiken eines tragbaren Kommunikationsgerätes nach einem der Ansprüche 1 bis 5, wobei dem hörgeschädigten Nutzer mindestens zwei Anregungssignale (SS) präsentiert werden.

7. Verfahren zum Anpassen von Signalverarbeitungscharakteristiken eines tragbaren Kommunikationsgerätes nach einem der Ansprüche 1 bis 6, wobei die vorgegebene Eigenschaft ein wahrgenommener Hörpegel ist.

8. Verfahren zum Anpassen von Signalverarbeitungscharakteristiken eines tragbaren Kommunikationsgerätes nach einem der Ansprüche 1 bis 7, wobei die vorgegebene Eigenschaft eine Konsonantenunterscheidung ist.

9. Verfahren zum Anpassen von Signalverarbeitungscharakteristiken eines tragbaren Kommunikationsgerätes nach einem der Ansprüche 1 bis 8, wobei die vorgegebene Eigenschaft Verständlichkeit ist.

10. Verfahren zum Anpassen von Signalverarbeitungscharakteristiken eines tragbaren Kommunikationsgerätes nach einem der Ansprüche 1 bis 9, wobei die vorgegebene Eigenschaft Klarheit ist.

11. Verfahren zum Anpassen von Signalverarbeitungscharakteristiken eines tragbaren Kommunikationsgerätes nach einem der Ansprüche 1 bis 10, wobei das Erhalten von die Wahrnehmung betreffenden Beurteilungen einer vorgegebenen Eigenschaft des mindestens einen Anregungssignals (SS) von dem hörgeschädigten Nutzer mit einer weiteren vorgegebenen Eigenschaft wiederholt wird.

12. Verfahren zum Anpassen von Signalverarbeitungscharakteristiken eines tragbaren Kommunikationsgerätes nach einem der Ansprüche 1 bis 11, weiterhin umfassend die Schritte
- Bestimmen eines die Wahrnehmung betreffenden Referenzpegels (PRL) eines ersten Anregungssignals (FSS) in einem Referenzfrequenzband (RFB), indem das erste Anregungssignal (FSS) dem hörgeschädigten Nutzer präsentiert wird, und Erhalten von die Wahrnehmung betreffenden Beurteilungen einer Lautstärke des ersten Anregungssignals (FSS) von dem hörgeschädigten Nutzer, und
- Bestimmen des die Wahrnehmung betreffenden Referenzpegels (PRL) eines zweiten Anregungssignals (SSS) in einem weiteren Frequenzband (FFB), indem das zweite Anregungssignal (SSS) dem hörgeschädigten Nutzer präsentiert wird, und Auffordern des hörgeschädigten Nutzers, dass er eine Lautstärke des zweiten Anregungssignals (SSS) mit der Lautstärke des ersten Anregungssignals (FSS) vergleicht.

13. Verfahren zum Anpassen von Signalverarbeitungscharakteristiken eines tragbaren Kommunikationsgerätes nach Anspruch 12, wobei ein am meisten angenehmer Pegel (MCL) für den die Wahrnehmung betreffenden Referenzpegel (PRL) verwendet wird.

14. Verfahren zum Anpassen von Signalverarbeitungscharakteristiken eines tragbaren Kommunikationsgerätes nach Anspruch 12 oder 13, wobei ein unangenehmer Pegel (UCL) für den die Wahrnehmung betreffenden Referenzpegel (PRL) verwendet wird.

15. Verfahren zum Anpassen von Signalverarbeitungseigenschaften eines tragbaren Kommunikationsgerätes nach einem der Ansprüche 12 bis 14, wobei das Erhalten von die Wahrnehmung betreffenden Beurteilungen einer Lautstärke des ersten Anregungssignals (FSS) von dem hörgeschädigten Nutzer den Schritt umfasst, dass man den Nutzer den Schalldruckpegel (SPL) des ersten Anregungssignals (FSS) variieren lässt, bis der die Wahrnehmung betreffende Referenzpegel (PRL) erreicht wird.

16. Verfahren zum Anpassen von Signalverarbeitungscharakteristiken eines tragbaren Kommunikationsgerätes nach einem der Ansprüche 12 bis 15, wobei das zweite Anregungssignal (SSS) von einer Art ähnlich dem ersten Anregungssignal (FSS) ist.

17. Verfahren zum Anpassen von Signalverarbeitungscharakteristiken eines tragbaren Kommunikationsgerätes nach einem der Ansprüche 12 bis 16, wobei das weitere Frequenzband (FFB) von dem Referenzfrequenzband (RFB) verschieden ist.

18. Verfahren zum Anpassen von Signalverarbeitungscharakteristiken eines tragbaren Kommunikationsgerätes nach einem der Ansprüche 12 bis 17, wobei der Schritt des
- Bestimmens des die Wahrnehmung betreffenden Referenzpegels (PRL) eines zweiten Anregungssignals (SSS) in einem weiteren Frequenzband (FFB), indem das zweite Anregungssignal (SSS) dem hörgeschädigten Nutzer präsentiert wird, und des Aufforderns des hörgeschädigten Nutzers, eine Lautstärke des zweiten Anregungssignals (SSS) mit der Lautstärke des ersten Anregungssignals (FSS) zu vergleichen,
mit mehreren wesentlichen einander gegenseitig ausschließende der weiteren Frequenzbänder wiederholt wird.

19. Verfahren zum Anpassen von Signalverarbeitungscharakteristiken eines tragbaren Kommunikationsgerätes nach einem der Ansprüche 12 bis 18, wobei das Vergleichen einer Lautstärke des zweiten Anregungssignals (SSS) mit der Lautstärke des ersten Anregungssignals (FSS) durchgeführt wird, um gleiche Lautstärke zu erhalten.

20. Verfahren zum Anpassen von Signalverarbeitungscharakteristiken eines tragbaren Kommunikationsgerätes nach einem der Ansprüche 12 bis 15, wobei eines oder mehrere von dem ersten Anregungssignal (FSS) oder dem zweiten Anregungssignal (SSS) periodische Signale und/oder frequenzbandbegrenztes Rauschen umfassen.

21. Verfahren zum Anpassen von Signalverarbeitungscharakteristiken eines tragbaren Kommunikationsgerätes nach einem der Ansprüche 12 bis 15 oder 20, wobei eines oder mehrere von dem ersten Anregungssignal (FSS) oder dem zweiten Anregungssignal (SSS) ein Geräusch beinhaltet.

22. Verfahren zum Anpassen von Signalverarbeitungscharakteristiken eines tragbaren Kommunikationsgerätes nach einem der Ansprüche 12 bis 15 oder 20 bis 21, wobei eines oder mehrere von dem ersten Anregungssignal (FSS) oder dem zweiten Anregungssignal (SSS) ein Sequenz von Geräuschen beinhaltet.

23. Verfahren zum Anpassen von Signalverarbeitungscharakteristiken eines tragbaren Kommunikationsgerätes nach Anspruch 21 oder 22, wobei das von dem ersten Anregungssignal (FSS) oder dem zweiten Anregungssignal (SSS) beinhaltete Geräusch ein Testwort ist.

24. Verfahren zum Anpassen von Signalverarbeitungscharakteristiken eines tragbaren Kommunikationsgerätes nach Anspruch 23, wobei das von dem ersten Anregungssignal (FSS) oder dem zweiten Anregungssignal (SSS) beinhaltete Testwort einen spektralen Energiegehalt hat, von welchem ein effektiver Teil sich innerhalb des Referenzfrequenzbandes (RFB) bzw. des weiteren Referenzbandes (FFB) befindet.

25. Verfahren zum Anpassen von Signalverarbeitungscharakteristiken eines tragbaren Kommunikationsgerätes nach einem der Ansprüche 1 bis 3, 12 bis 15 oder 23 bis 24, wobei eines oder mehrere von den Testwörtem des mindestens einen Anregungssignals (SS), des ersten Anregungssignals (FSS) oder des zweiten Anregungssignals (SSS) entsprechend dem Alltag des hörgeschädigten Nutzers gewählt ist.

26. Verfahren zum Anpassen von Signalverarbeitungscharakteristiken eines tragbaren Kommunikationsgerätes gemäß einem der Ansprüche 1 bis 3, 12 bis 15 oder 20 bis 25,
wobei eines oder mehrere von dem begrenzten Frequenzband, dem Referenzfrequenzband (RFB) oder dem weiteren Frequenzband ein Unterband des hörbaren Frequenzbandes ist.

27. Verfahren zum Anpassen von Signalverarbeitungscharakteristiken eines tragbaren Kommunikationsgerätes nach einem der Ansprüche 12 bis 15 oder 20 bis 26, wobei eines oder mehrere von dem Referenzfrequenzband (RFB) oder dem weiteren Frequenzband (FFB) ein Unterband des Frequenzbandes von 100 Hz bis 10 kHz ist.

28. Verfahren zum Anpassen von Signalverarbeitungscharakteristiken eines tragbaren Kommunikationsgerätes nach einem der Ansprüche 1 bis 3, 12 bis 15 oder 20 bis 27, wobei eines oder mehrere von dem begrenzten Frequenzband, dem Referenzfrequenzband (RFB) oder dem weiteren Frequenzband (FFB) eine Breite hat, die ausgewählt ist aus den Breiten von 1,5 Oktaven, einer Oktave, 2/3 Oktaven oder 1/3 Oktaven.

29. Verfahren zum Anpassen von Signalverarbeitungscharakteristiken eines tragbaren Kommunikationsgerätes nach einem der Ansprüche 1 bis 3, 12 bis 15 oder 20 bis 28, wobei eines oder mehrere von dem begrenzten Frequenzband oder dem Referenzfrequenzband (RFB) ein Band ist, das ausgewählt ist aus den Bändern des Bandes von 500 Hz bis 1 kHz oder des Bandes von 250 Hz bis 800 Hz.

30. Verfahren zum Anpassen von Signalverarbeitungscharakteristiken eines tragbaren Kommunikationsgerätes nach einem der Ansprüche 1 bis 3, 12 bis 15 oder 20 bis 29, wobei eines oder mehrere von dem begrenzten Frequenzband oder dem weiteren Frequenzband (FFB) ein Band ist, das ausgewählt ist aus den Bändern des Bandes von 100 Hz bis 500 Hz, des Bandes von 250 HZ bis 500 Hz, des Bandes von 1 kHz bis 2 kHz, oder des Bandes von 2 kHz bis 4 kHz.

## Revendications

1. Procédé d'adaptation des caractéristiques de traitement de signal d'un dispositif de communication portable pour un utilisateur souffrant d'une déficience auditive, comprenant les étapes consistant à
- évaluer une déficience auditive dudit utilisateur souffrant d'une déficience auditive en présentant au moins un signal de stimuli (SS) audit utilisateur souffrant d'une déficience auditive, et en obtenant des jugements perceptuels d'un attribut prédéterminé dudit au moins un signal de stimuli (SS) dudit utilisateur souffrant d'une déficience auditive, et
- ajuster lesdits paramètres de traitement de signal dudit dispositif de communication portable en fonction desdits jugements perceptuels dudit au moins un signal de stimuli (SS) ;
de telle manière que ledit au moins un signal de stimuli (SS) comprenne un ensemble de mots de test, lesdits mots de test ayant chacun un contenu d'énergie spectrale dont la partie effective se situe dans une bande de fréquences restreinte sélectionnée à partir d'un ensemble de bandes de fréquence restreintes.

2. Procédé d'adaptation des caractéristiques de traitement de signal d'un dispositif de communication portable selon la revendication 1, dans lequel ledit dispositif de communication portable est un appareil auditif.

3. Procédé d'adaptation des caractéristiques de traitement de signal d'un dispositif de communication portable selon la revendication 1 ou 2, dans lequel ledit dispositif de communication portable comprend des moyens de compensation pour compenser la perte auditive.

4. Procédé d'adaptation des caractéristiques de traitement de signal d'un dispositif de communication portable selon l'une quelconque des revendications 1 à 3, dans lequel ladite étape consistant à obtenir les jugements perceptuels d'un attribut prédéterminé dudit au moins un signal de stimuli (SS) dudit utilisateur souffrant d'une déficience auditive, comprend l'étape consistant à laisser ledit utilisateur changer ledit attribut prédéterminé jusqu'à ce qu'un niveau perceptuel prédéterminé soit atteint.

5. Procédé d'adaptation des caractéristiques de traitement de signal d'un dispositif de communication portable selon l'une quelconque des revendications 1 à 4, dans lequel ladite étape consistant à
- évaluer une déficience auditive dudit utilisateur souffrant d'une déficience auditive en présentant au moins un signal de stimuli (SS) audit utilisateur souffrant d'une déficience auditive, et en obtenant des jugements perceptuels d'un attribut prédéterminé dudit au moins un signal de stimuli (SS) dudit utilisateur souffrant d'une déficience auditive,
est répétée avec plusieurs bandes de fréquence restreintes exclusives mutuellement importantes.

6. Procédé d'adaptation des caractéristiques de traitement de signal d'un dispositif de communication portable selon l'une quelconque des revendications 1 à 5, dans lequel on présente au moins deux signaux de stimuli (SS) audit utilisateur souffrant d'une déficience auditive.

7. Procédé d'adaptation des caractéristiques de traitement de signal d'un dispositif de communication portable selon l'une quelconque des revendications 1 à 6, dans lequel ledit attribut prédéterminé est un niveau auditif perceptuel.

8. Procédé d'adaptation des caractéristiques de traitement de signal d'un dispositif de communication portable selon l'une quelconque des revendications 1 à 7, dans lequel ledit attribut prédéterminé est une distinction de consonne.

9. Procédé d'adaptation des caractéristiques de traitement de signal d'un dispositif de communication portable selon l'une quelconque des revendications 1 à 8, dans lequel ledit attribut prédéterminé est l'intelligibilité.

10. Procédé d'adaptation des caractéristiques de traitement de signal d'un dispositif de communication portable selon l'une quelconque des revendications 1 à 9, dans lequel ledit attribut prédéterminé est la clarté.

11. Procédé d'adaptation des caractéristiques de traitement de signal d'un dispositif de communication portable selon l'une quelconque des revendications 1 à 10, dans lequel ladite étape consistant à obtenir des jugements perceptuels d'un attribut prédéterminé dudit au moins un signal de stimuli (SS) dudit utilisateur souffrant d'une déficience auditive, est répétée avec un attribut prédéterminé supplémentaire.

12. Procédé d'adaptation des caractéristiques de traitement de signal d'un dispositif de communication portable selon l'une quelconque des revendications 1 à 11, comprenant en outre les étapes consistant à
- déterminer un niveau de référence perceptuel (PRL) d'un premier signal de stimuli (FSS) dans une bande de fréquences de référence (RFB) en présentant ledit premier signal de stimuli (FSS) audit utilisateur souffrant d'une déficience auditive, et en obtenant des jugements perceptuels d'une force dudit premier signal de stimuli (FSS) dudit utilisateur souffrant d'une déficience auditive, et
- déterminer ledit niveau de référence perceptuel (PRL) d'un deuxième signal de stimuli (SSS) dans une bande de fréquences supplémentaire (FFB) en présentant ledit second signal de stimuli (SSS) audit utilisateur souffrant d'une déficience auditive, et demander audit utilisateur souffrant d'une déficience auditive de comparer une force dudit second signal de stimuli (SSS) à ladite force dudit premier signal de stimuli (FSS).

13. Procédé d'adaptation des caractéristiques de traitement de signal d'un dispositif de communication portable selon la revendication 12, dans lequel un niveau plus confortable (MCL) est utilisé pour ledit niveau de référence perceptuel (PRL).

14. Procédé d'adaptation des caractéristiques de traitement de signal d'un dispositif de communication portable selon la revendication 12 ou 13, dans lequel un niveau inconfortable (UCL) est utilisé pour ledit niveau de référence perceptuel (PRL).

15. Procédé d'adaptation des caractéristiques de traitement de signal d'un dispositif de communication portable selon l'une quelconque des revendications 12 à 14, dans lequel ladite étape consistant à obtenir des jugements perceptuels d'une force dudit premier signal de stimuli (FSS) dudit utilisateur souffrant d'une déficience auditive, comprend l'étape consistant à laisser l'utilisateur changer le niveau de pression acoustique (SPL) du premier signal de stimuli (FSS) jusqu'à ce que ledit niveau de référence perceptuel (PRL) soit atteint.

16. Procédé d'adaptation des caractéristiques de traitement de signal d'un dispositif de communication portable selon l'une quelconque des revendications 12 à 15, dans lequel ledit second signal de stimuli (SSS) est d'un type similaire audit premier signal de stimuli (FSS).

17. Procédé d'adaptation des caractéristiques de traitement de signal d'un dispositif de communication portable selon l'une quelconque des revendications 12 à 16, dans lequel ladite bande de fréquences supplémentaire (FFB) est différente de ladite bande de fréquences de référence (RFB).

18. Procédé d'adaptation des caractéristiques de traitement de signal d'un dispositif de communication portable selon l'une quelconque des revendications 12 à 17, dans lequel ladite étape consistant à
- déterminer ledit niveau de référence perceptuel (PRL) d'un second signal de stimuli (SSS) dans une bande de fréquences supplémentaire (FFB) en présentant ledit second signal de stimuli (SSS) audit utilisateur souffrant d'une déficience auditive, et en demandant audit utilisateur souffrant d'une déficience auditive de comparer une force dudit second signal de stimuli (SSS) à ladite force dudit premier signal de stimuli (FSS),
est répétée avec plusieurs dites bandes de fréquence supplémentaires exclusives mutuellement importantes.

19. Procédé d'adaptation des caractéristiques de traitement de signal d'un dispositif de communication portable selon l'une quelconque des revendications 12 à 18, dans lequel ladite étape consistant à comparer une force dudit second signal de stimuli (SSS) à ladite force dudit premier signal de stimuli (FSS), est réalisée pour établir une force égale.

20. Procédé d'adaptation des caractéristiques de traitement de signal d'un dispositif de communication portable selon l'une quelconque des revendications 12 à 15, dans lequel un ou plusieurs dudit premier signal de stimuli (FSS) ou dudit second signal de stimuli (SSS) comprennent des signaux périodiques et/ou un bruit limité de bande de fréquences.

21. Procédé d'adaptation des caractéristiques de traitement de signal d'un dispositif de communication portable selon l'une quelconque des revendications 12 à 15 ou 20, dans lequel un ou plusieurs dudit premier signal de stimuli (FSS) ou dudit second signal de stimuli (SSS) comprennent un son.

22. Procédé d'adaptation des caractéristiques de traitement de signal d'un dispositif de communication portable selon l'une quelconque des revendications 12 à 15 ou 20 à 21, dans lequel un ou plusieurs dudit premier signal de stimuli (FSS) ou dudit second signal de stimuli (SSS) comprennent une séquence de sons.

23. Procédé d'adaptation des caractéristiques de traitement de signal d'un dispositif de communication portable selon la revendication 21 ou 22, dans lequel ledit son composé dudit premier signal de stimuli (FSS) ou dudit second signal de stimuli (SSS) est une mot de test.

24. Procédé d'adaptation des caractéristiques de traitement de signal d'un dispositif de communication portable selon la revendication 23, dans lequel ledit mot de test composé dudit premier signal de stimuli (FSS) ou dudit second signal de stimuli (SSS) possède un contenu d'énergie spectrale dont une partie effective se situe dans ladite bande de fréquences de référence (RFB) ou ladite bande de fréquences supplémentaire (FFB), respectivement.

25. Procédé d'adaptation des caractéristiques de traitement de signal d'un dispositif de communication portable selon l'une quelconque des revendications 1 à 3, 12 à 15 ou 23 à 24, dans lequel un ou plusieurs dudit mot de test dudit au moins un signal de stimuli (SS), dudit premier signal de stimuli (FSS) ou dudit second signal de stimuli (SSS) est choisi en fonction du quotidien dudit utilisateur souffrant d'une déficience auditive.

26. Procédé d'adaptation des caractéristiques de traitement de signal d'un dispositif de communication portable selon l'une quelconque des revendications 1 à 3, 12 à 15 ou 20 à 25, dans lequel une ou plusieurs de ladite bande de fréquences restreinte, ladite bande de fréquences de référence (RFB) ou ladite bande de fréquences supplémentaire est une sous-bande de la bande de fréquences audible.

27. Procédé d'adaptation des caractéristiques de traitement de signal d'un dispositif de communication portable selon l'une quelconque des revendications 12 à 15 ou 20 à 26, dans lequel une ou plusieurs de ladite bande de fréquences de référence (RFB) ou ladite bande de fréquences supplémentaire (FFB) est une sous-bande de la bande de fréquences de 100 Hz à 10 kHz.

28. Procédé d'adaptation des caractéristiques de traitement de signal d'un dispositif de communication portable selon l'une quelconque des revendications 1 à 3, 12 à 15 ou 20 à 27, dans lequel une ou plusieurs de ladite bande de fréquences restreinte, ladite bande de fréquences de référence (RFB) ou ladite bande de fréquences supplémentaire (FFB) possède une largeur sélectionnée à partir des largeurs de 1,5 octave, une octave, 2/3 d'octave ou 1/3 d'octave.

29. Procédé d'adaptation des caractéristiques de traitement de signal d'un dispositif de communication portable selon l'une quelconque des revendications 1 à 3, 12 à 15 ou 20 à 28, dans lequel une ou plusieurs de ladite bande de fréquences restreinte ou ladite bande de fréquences de référence (RFB) est une bande sélectionnée à partir des bandes de la bande de 500 Hz à 1 kHz ou la bande de 250 Hz à 800 Hz.

30. Procédé d'adaptation des caractéristiques de traitement de signal d'un dispositif de communication portable selon l'une quelconque des revendications 1 à 3, 12 à 15 ou 20 à 29, dans lequel une ou plusieurs de ladite bande de fréquences restreinte ou ladite bande de fréquences supplémentaire (FFB) est une bande sélectionnée à partir des bandes de la bande de 100 Hz à 500 Hz, la bande de 250 Hz à 500 Hz, la bande de 1 kHz à 2 kHz ou la bande de 2 kHz à 4 kHz.
